# EUROPEAN PATENT SPECIFICATION

(11) **EP 3 355 641 B1**
(45) Date of publication and mention of the grant of the patent: **14.04.2021**
(21) Application number: 18153366.2
(22) Date of filing: 25.01.2018
(51) Int. Cl.: H04W 72/08, H04W 28/02

(54) **METHOD OF MAPPING QOS (IP) FLOWS TO DRB (QOS FLOWS) AND RELATED APPARATUSES USING THE SAME**
VERFAHREN ZUR KARTIERUNG VON QOS (IP) DATENFLÜSSE ZU DRB (QOS FLÜSSE) UND ZUGEHÖRIGE VORRICHTUNGEN MIT VERWENDUNG DAVON
PROCÉDÉ DE CARTOGRAPHIE DE FLUX QOS (IP) VERS DRB (FLUX QOS) ET APPAREILS ASSOCIÉS L'UTILISANT

(30) Priority: 25.01.2017 US 201762450549 P; 24.01.2018 US 201815878428
(43) Date of publication of application: 01.08.2018
(73) Proprietor: Acer Incorporated, New Taipei City 221 (TW)
(72) Inventor: CHIU, Chun-Yuan, New Taipei City 221 (TW); CHEN, Chun-Chia, New Taipei City 221 (TW)
(74) Representative: Haseltine Lake Kempner LLP

(56) References cited:
- EP-A1- 2 824 983
- WO-A1-2018/028061
- WO-A1-2018/059518

## Description

### TECHNICAL FIELD

The disclosure is directed to methods mapping data packets, and user equipments (UE) using the same method.

### BACKGROUND

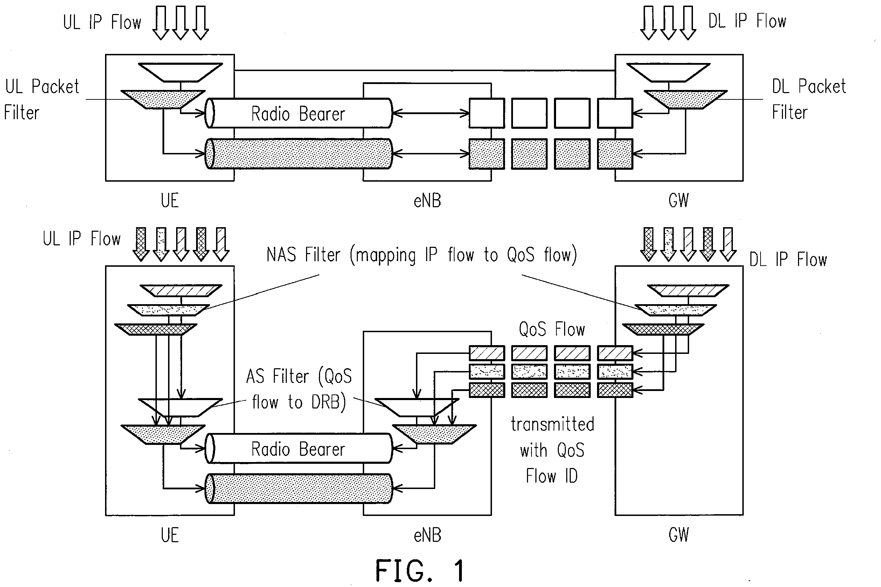

FIG. 1 illustrates differences between a Long-Term Evolution (LTE) Quality of Service (QoS) framework and a 5G QoS framework. Traditionally, a LTE communication system establishes an evolved packet system (EPS) bearer having a specific QoS attribute as a communication link between a Packet Data Network (PDN) gateway (GW) located within a Core Network (CN) and a UE. A radio bearer is a communication link which transports data packets of an EPS bearer between an eNB and a UE. When a radio bearer or data radio bearer (DRB) has been established, there would be a 1:1 mapping relationship between this radio bearer and an EPS bearer. Thus, the connection between the UE and the PDN GW is intuitive as there is a communication link utilizing the EPS bearer straight through. Whereas for a 5G communication system, there is not a 1:1 mapping but instead there could be multiple QoS flows, each having a QoS flow identifier (ID), mapped to a radio bearer or multiple radio bearers.

The current QoS mechanism of a 5G communication system is 'reflective QoS' which means that an uplink (UL) behavior of a UE would reflect a downlink (DL) behavior. More specifically, in an Access Stratum (AS) level, after a UE has received DL packets within a DRB, the UE would determine, from the DL packets, a mapping relationship between a QoS flow and the DRB for future UL. In a Non-Access Stratum (NAS) level, the UE determines a mapping between an internet protocol (IP) flow and a QoS flow for UL based on previously received DL packets which belong to the same IP flow and the associated QoS flow ID.

Currently for DL, the NAS would be responsible for the mapping between IP flow and QoS flow, and AS would be responsible for the mapping between QoS flow and DRB. For UL, the NAS would be responsible for the mapping between IP flow and QoS flow, and AS would be responsible for the mapping between QoS flow and DRB. The DL packets over an Uu air interface (Uu) would be marked in band with a QoS flow ID for the purposes of reflective QoS, and UL packets over Uu would be marked in band with a QoS flow ID for the purposes of marking forwarded packets to the CN.

By using this approach, the UE has to inspect every single packet within a DRB to know the mapping between a QoS flow and the DRB so as to discern the required QoS level of a QoS flow. However, the problem with this approach is that the signaling overhead would be increased because of the inclusion of the QoS flow IDs. This may increase signaling overheads as well as processing times as the result of the increased overheads.

Some background information can be found in International patent applications WO 2018/028061 and WO 2018/059518 and European patent application EP 2,824,983.

### SUMMARY OF THE DISCLOSURE

Accordingly, the present disclosure is directed to a method of mapping data packets, and user equipments (UE) using the same method.

The present invention is set out in the appended set of claims.

In order to make the aforementioned features and advantages of the disclosure comprehensible, exemplary embodiments accompanied with figures are described in detail below. It is to be understood that both the foregoing general description and the following detailed description are exemplary, and are intended to provide further explanation of the disclosure as claimed.

It should be understood, however, that this summary may not contain all of the aspect and embodiments of the disclosure and is therefore not meant to be limiting or restrictive in any manner. Also the disclosure would include improvements and modifications which are obvious to one skilled in the art.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 illustrates differences between a Long-Term Evolution (LTE) Quality of Service (QoS) framework and a 5G QoS framework.
FIG. 2 illustrates a method used by a user equipment (UE) to map data packets in accordance with one of the exemplary embodiments of the disclosure.
FIG. 3 illustrates a block diagram of the hardware of a UE in accordance with one of the exemplary embodiments of the disclosure.

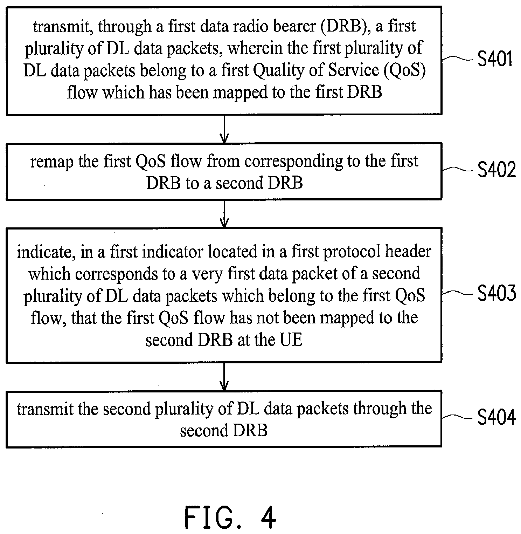

FIG. 4 illustrates a method used by a base station to map data packets in accordance with one of the exemplary embodiments not covered by the claimed invention.
FIG. 5 illustrates a block diagram of the hardware of a base station in accordance with one of the exemplary embodiments of the disclosure.
FIG. 6 illustrates QoS flow remapping from a first DRB to a second DRB in accordance with one of the exemplary embodiments of the disclosure.
FIG. 7 illustrates IP flow to QoS flow remapping in accordance with one of the exemplary embodiments of the disclosure.
FIG. 8 - 9 illustrates explicitly reconfiguring a default QoS flow ID by an eNB through RRC signaling in accordance with one of the exemplary embodiments of the disclosure.
FIG. 10 illustrates explicitly reconfiguring a default QoS flow ID by an eNB and a UE through RRC signaling in accordance with one of the exemplary embodiments of the disclosure.
FIG. 11 illustrates implicitly reconfigured QoS flow ID with packet reconstruction in accordance with one of the exemplary embodiments of the disclosure.
FIG. 12 illustrates implicitly reconfigured QoS flow ID without packet reconstruction in accordance with one of the exemplary embodiments of the disclosure.
FIG. 13 illustrates implicitly reconfiguring a new default QoS flow ID and applying the new default ID by using an in-band indicator in accordance with one of the exemplary embodiments of the disclosure.
FIG. 14 - 15 illustrates explicitly reconfiguring QoS flow ID for downlink by eNB through RRC signaling in accordance with one of the exemplary embodiments of the disclosure.
FIG. 16 illustrates implicitly reconfiguring QoS flow ID for downlink with packet reconstruction in accordance with one of the exemplary embodiments of the disclosure.
FIG. 17 illustrates implicitly reconfiguring QoS flow ID for downlink without packet reconstruction in accordance with one of the exemplary embodiments of the disclosure.
FIG. 18 illustrates implicitly reconfiguring a new default QoS flow ID for downlink and applying the new default ID by using an in-band indicator in accordance with one of the exemplary embodiments of the disclosure.

### DETAILED DESCRIPTION OF DISCLOSED EMBODIMENTS

Reference will now be made in detail to the present exemplary embodiments of the disclosure, examples of which are illustrated in the accompanying drawings. Wherever possible, the same reference numbers are used in the drawings and the description to refer to the same or like parts.

Based on the above described technical problem, the disclosure provides a method and related apparatuses for reducing user plane protocol overhead in downlink (DL) and/or uplink (UL) and for reducing user equipment (UE) processing overhead. Some of the main ideas of this disclosure may including (1) configuring and / or reconfiguring a "default" Quality of Service (QoS) flow identifier (ID) for a data radio bearer (DRB) and omit the default QoS flow ID for UL and / or DL, (2) indicating for DL a packet received by a base station (i.e., eNB or gNB) from a Core Network (CN) that a change of mapping relationship between an internet protocol (IP) flow and a QoS flow has occurred, (3) omitting the QoS flow ID if there is no changing of mapping between an IP flow and a QoS flow or between a QoS flow and a DRB, and (4) omitting a checking of UL mapping table if there is no change of the above described mapping relationship.

In order to reduce user plane protocol overhead in DL and/or UL, a DRB can be configured explicitly or implicitly with a default QoS flow ID, UL packets of the DRB over the Uu air interface (Uu) may not be required to be marked in band with the default QoS flow ID, and the default QoS flow ID may also be reconfigured. In order to reduce UE processing overhead and user plane protocol overhead in DL, the disclosure provides mechanisms for the operation of reflective QoS on an Access Stratum (AS) level and for the operation of reflective QoS on a Non-Access Stratum (NAS) level. For the operation of reflective QoS on an AS level, only the first (few) DL packets of a QoS flow could be indicated by an eNB (or base station) after the eNB maps or remaps the QoS flow to a DRB with the indicated packet(s) to be checked by a UE to update the QoS flow to DRB mapping in UL and to be transmitted with QoS flow ID over Uu. As in the operation of reflected QoS on an NAS level, only the first (few) DL packet(s) of an IP flow is indicated by a CN after the CN maps or remaps the IP flow to a QoS flow with the indicated packet(s) to be checked by a UE to update the IP flow to QoS flow mapping in UL and to be transmitted with QoS flow ID over Uu.

To solve the above described problem, the rationale of the disclosure is provided as follows. In order to implement 'reflective QoS', a UE would determine the mapping between a QoS flow ID and a DRB for a future uplink based on previously received downlink packets from within a DRB and would subsequently apply a filter to map between a UL QoS flows and a DRB. In order to do so, a UE would be required to continuously monitor the QoS Flow ID in DL Packet Data Convergence Protocol (PDCP) packets so as to update the mapping between a QoS flow ID and a DRB for the UL if necessary. The mapping between such QoS flow ID and the DRB could be accomplished by a Radio Resource Control (RRC) signaling.

It is worth considering that DL packets and UL packets over Uu are marked in band with a QoS flow ID for different purposes. The mapping between a QoS flow and a DRB in DL could be changed by an eNB. For UL, such mapping could be changed through RRC or through 'reflective QoS'. The mapping between an IP flow and a QoS flow ID in DL could be changed by a CN. For UL, such mapping could be changed through 'reflective QoS'.

For the purpose of reducing UE processing overhead and reducing user plane protocol overhead in DL, the UE does not actually have to know the QoS flow ID of every single packet received from the eNB to support the 'reflective QoS' on AS level because the QoS flow ID to DRB mapping in DL may not be changed frequently. However, in order to support the 'reflective QoS' on NAS level, it would be impossible that only the first (few) DL packet(s) of an IP flow is transmitted with QoS flow ID over Uu after the CN maps or remaps the IP flow to a QoS flow because an eNB is very unlikely know the IP flow to which a packet belongs and consequently is not aware of the change in the mapping between an IP flow and a QoS flow.

Based on the above described rationales, the QoS mechanism for the operation of 'reflective QoS' on AS level and for the operation of 'reflective QoS' on NAS level could be described as follows. For the operation of 'reflective QoS' on the AS level, after the eNB maps or remaps a QoS flow to a DRB, only first (few) DL packet(s) of the QoS flow could be indicated by the eNB. The packet(s) indicated by the eNB could be checked by a UE to update the mapping between the QoS flow and the DRB. The packet(s) indicated by the eNB could be transmitted with QoS flow ID over Uu. For the operation of 'reflective QoS' on NAS level, after the CN maps or remaps an IP flow to a QoS flow, only first (few) DL packet(s) of the IP flow could be indicated by CN. The packet(s) indicated by the CN could be checked by the UE to update the mapping between the IP flow and the QoS flow mapping for UL. The indicated packet(s) could be transmitted with QoS flow ID over Uu.

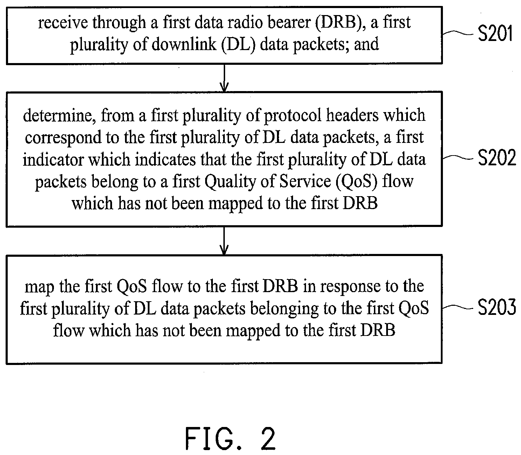

The implement the above described mechanisms, the disclosure provides a method of mapping data packets and related apparatuses using the same method. FIG. 2 illustrates a method used by a UE to map data packets in accordance with one of the exemplary embodiments of the disclosure. In step S201, the UE receives from a base station through a first DRB, a first plurality of DL data packets. In step S202, the UE determines, from a first plurality of protocol headers which correspond to the first plurality of DL data packets, a first indicator which indicates that the first plurality of DL data packets belong to a first QoS flow which has not been mapped to the first DRB. In step S203, the UE maps the first QoS flow to the first DRB in response to the first plurality of DL data packets belonging to the first QoS flow which has not been mapped to the first DRB.

Moreover, the UE may also receive, from the base station through the first DRB, a second plurality of DL data packets; determining, from a second plurality of protocol headers which correspond to the second plurality of DL data packets, a second indicator which indicates that the second plurality of DL data packets belong to a second QoS flow which has been mapped to the first DRB; and not changing the mapping between the second QoS flow and the first DRB in response to the second plurality of DL data packets belonging to the second QoS flow which has been mapped to the first DRB. The process of mapping the first QoS flow to the first DRB in response to the first plurality of DL data packets belonging to the first QoS flow which has not been mapped to the first DRB includes obtaining, from the first plurality of protocol headers which correspond to the first plurality of DL data packets, a first QoS flow identifier (ID) which identifies the first QoS flow; adding, to a lookup table, a mapping relationship among the first QoS flow and the first DRB; and removing, from the lookup table, a mapping relationship among the first QoS flow and a second DRB if the mapping relationship among the first QoS flow and the second DRB exists.

The method may also further include skip obtaining, from the second plurality of protocol headers which correspond to the second plurality of DL data packets, a second QoS flow ID which identifies the second QoS flow. The method may also further include transmitting, to the base station through the first DRB, a first plurality of UL data packets by determining from the lookup table, a QoS flow ID of the first plurality of UL data packets and a DRB which corresponds to the QoS flow ID. The second indicator may also indicate that the second QoS flow ID does not exist in the second plurality of protocol headers.

According to an alternative embodiment of FIG. 2, in step S201, the UE instead may receive, from a CN through a first QoS flow, a first plurality of DL data packets. In step S202, the UE determines, from a first plurality of protocol headers which correspond to the first plurality of DL data packets, a first indicator which indicates that the first plurality of DL data packets belong to a first IP flow which has not been mapped to the first QoS flow. In step S203, the UE maps the first IP flow to the first QoS flow in response to the first plurality of DL data packets belonging to the first IP flow which has not been mapped to the first QoS flow. The alternative embodiment is similar to the embodiment first described for FIG. 2 except that the emphasis is on the interaction between the UE and the CN.

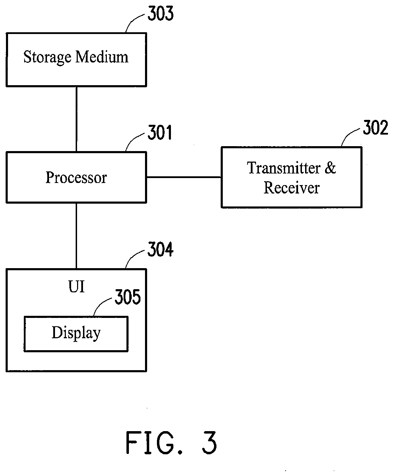

FIG. 3 illustrates a block diagram of the hardware of a UE in accordance with one of the exemplary embodiments of the disclosure. The term UE in this disclosure could be a mobile station, an advanced mobile station (AMS), a server, a client, a desktop computer, a laptop computer, a network computer, a workstation, a personal digital assistant (PDA), a tablet, a personal computer (PC), a scanner, a (smart) telephone device, a watch, a pager, a camera, a television, a hand-held video game device, a musical device, a wireless sensor, a drone, and the like. In some applications, a UE may be a fixed computer device operating in a mobile environment, such as a bus, a train, an airplane, a boat, a car, and so forth.

The structure of the UE would include not limited to a processor 301 coupled to a transmitter and/or receiver (transceiver) 302, a storage medium303, and optionally a user interface (UI) 304 which may or may not contain a display 305. The transmitter and/or receiver 302 are controlled by the processor 301 to down-convert radio frequency signals (RF) (or millimeter wave signals) received from an antenna (array) into baseband signals to be processed by the processor 301 and are controlled by the processor301 to up-convert baseband signals into RF or millimeter wave signals to be transmitted through the antenna (array). The transmitter and/or receiver 302 may also include one or more sets of hardware tuned to different frequency bands such as RF frequency, millimeter frequency, Bluetooth frequency, WiFi frequency, and so forth. The storage medium303 contains temporary and/or permanent storage medium for storage of temporarily buffered data or for permanent (non-volatile) data storage. The processor 301 would include one or more may include one or more hardware processing units such as processors, controllers, or discrete integrated circuits to implement the disclosed technique for implementing the method used by a user equipment (UE) to map data packets and all its exemplary embodiments.

In an alternative embodiment not being part of the invention, the disclosure also provides a method used by a CN to transmit DL data packets. The method would include transmitting, to a UE through a first QoS flow, a first plurality of DL data packets, wherein the first plurality of DL data packets belong to a first IP flow which has been mapped to the first QoS flow; remapping the first IP flow from corresponding to the first QoS flow to a second QoS flow; indicating, in a first indicator located in a first protocol header which corresponds to a very first data packet of a second plurality of DL data packets which belong to the first IP flow, that the first IP flow has not been mapped to the second QoS flow at the UE; and transmitting, to the UE, the second plurality of DL data packets through the second QoS flow. Moreover, the first indicator located in a first protocol header which corresponds to a very first data packet of a second plurality of DL data packets may also indicate that a first QoS flow ID associated with the second plurality of DL data packets exists.

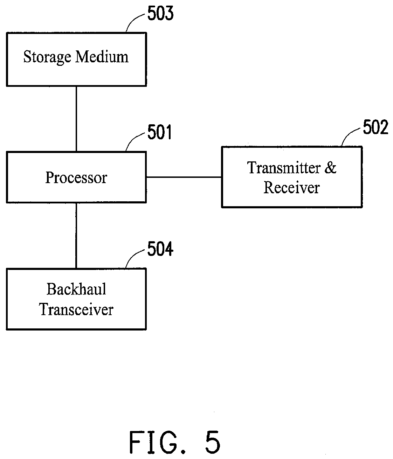

FIG. 5 illustrates a block diagram of the hardware of a base station in accordance with one of the exemplary embodiments of the disclosure. The term BS in this disclosure could be a variation or a variation or an advanced version of a 5G BS, macro cell BS, micro cell BS, pico cell BS, femto cell BS, "eNodeB" (eNB), "gNodeB" (gNB), a Node-B, an advanced BS (ABS), a base transceiver system (BTS), an access point, a home BS, a relay station, a scatterer, a repeater, an intermediate node, an intermediary, satellite-based communication BSs, and so forth.

The structure of the BS would include not limited to would include not limited to a processor 501 coupled to a transmitter and/or receiver (transceiver) 502, a storage medium 503, and a backhaul transceiver 504. The transmitter and/or receiver 502 are controlled by the processor 501 to down-convert radio frequency signals (RF) (or millimeter wave signals) received from an antenna (array) into baseband signals to be processed by the processor 501 and are controlled by the processor 501 to up-convert baseband signals into RF or millimeter wave signals to be transmitted through the antenna (array). The storage medium 503 contains temporary and/or permanent storage medium for storage of temporarily buffered data or for permanent (non-volatile) data storage. The backhaul transceiver 504 may include one or more transceivers (e.g. S1 interface) for communicating with the core network and/or one or more inter-base station interfaces (e.g. X2) for communicating with another base station. The processor 501 would include one or more may include one or more hardware processing units such as processors, controllers, or discrete integrated circuits to implement the disclosed technique for a base station to map data packets and all its exemplary embodiments.

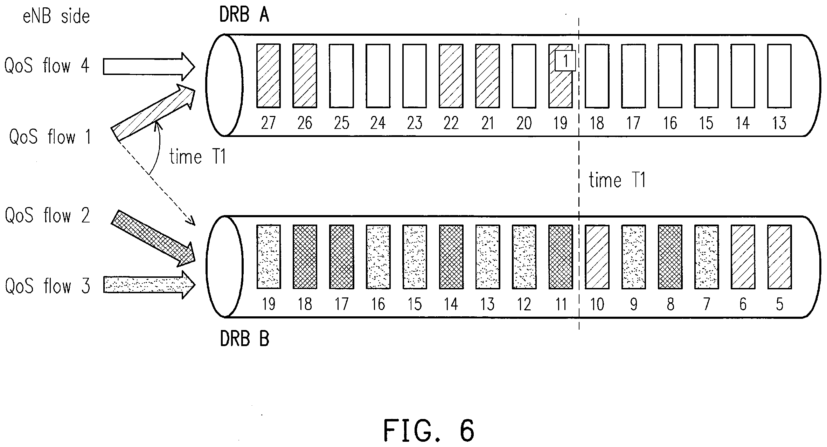

To elucidate the above described method of mapping data packets and related apparatuses, the disclosure provides various exemplary embodiments. FIG. 6 illustrates QoS flow remapping from a first DRB to a second DRB in accordance with one of the exemplary embodiments of the disclosure. For operations at an eNB side, for example, when an eNB remaps a first QoS flow from a first DBR (e.g. DBR B) to a second DBR (e.g. DRB A), the first QoS flow's first DL packet (e.g., SN = 19) which is transmitted through the newly mapped DRB (e.g., A) is indicated in the header of the protocol applied between the UE and the eNB. The first DL packet (e.g. SN = 19) of the first QoS flow which is transmitted through the new mapped DRB (e.g. A) would be marked in band with the QoS flow ID. For operations at a UE side, when the UE receives a packet (e.g. SN = 19) which is indicated in the header of the protocol applied between the UE and the eNB, the UE would read the marked QoS flow ID (e.g. QoS flow ID = 1), check the mapping between the first QoS flow and the DRB, and update the mapping between the QoSflow and the DRB for UL accordingly such as by remapping the first QoS flow to DRB A in UL.

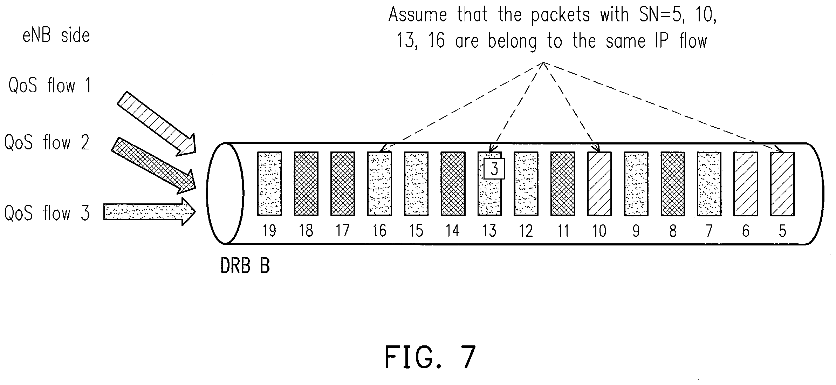

FIG. 7 illustrates IP flow to QoS flow remapping in accordance with one of the exemplary embodiments of the disclosure. For operations at a CN side, when the CN remaps a IP flow from a first QoS flow (e.g. QoS flow 1) to a second QoS flow(e.g. QoS flow 3), the first DL packet (e.g. SN = 13) of the IP flow which is transmitted through the new mapped second QoS flow(e.g. QoS flow 3) is indicated in the header of the protocol applied between the CN and the eNB. For operations at an eNB side, when the eNB receives a packet (e.g. SN = 13) from the CN and the packet is indicated in the header of the protocol applied between the CN and the eNB, the packet (e.g. SN = 13) could be transmitted through the mapped DRB (e.g. DRB B), the packet (e.g., SN = 13) could be indicated in the header of the protocol applied between the UE and the eNB, and the packet (e.g. SN = 13) could be marked in band with the QoS flow ID (e.g. QoS flow ID = 3). For operations at a UE side, when the UE receives a packet (e.g. SN = 13) which is indicated in the header of the protocol applied between the UE and the eNB, the UE may read the marked QoS flow ID (e.g. QoS flow ID = 3), check the mapping between the IP flow and the QoS flow, and update the mapping between the IP flow and the QoS flow accordingly such as by remapping the IP flow from QoS flow 1 to QoS flow 3 for UL.

Next, the disclosure provides an exemplary embodiment , not being part of the invention, for the method of mapping data packets. The exemplary embodiment would reduce user plane protocol overhead for UL data packets. It has been observed that an eNB has to know the QoS flow ID of each packet received from UE exactly because the eNB would be responsible for marking each UL packet with the correct QoS flow ID and then forwarding each UL packet marked with such QoS flow ID to the Core Network (CN). However, if the eNB could know the QoS flow ID of some UL packets implicitly, then these UL packets could be transmitted without any QoS flow ID over Uu. Thus, a DRB could be configured explicitly or implicitly with a default QoSflow ID. UL packets of the DRB over Uu would not be required to be marked in band with the "default" QoSflow ID.

Configure a default QoSflow ID could be as follows. When a DRB has been established, an eNB may configure a set of QoS flow IDs which are mapped to the DRB through a RRC message. An explicit configuration could be implemented by having the default QoS flow ID which belongs to the set of QoS flow IDs be either configured through the same RRC message simultaneously or through other RRC message. When a DRB has been established, the eNB may not configure a set of QoS flow IDs which are mapped to the DRB through RRC. The set of QoS flow IDs which have been mapped to the DRB could be derived from the previously described mechanism of 'reflective QoS' in an AS level. An implicit configuration could be implemented, as an exemplary embodiment, by having the default QoS flow ID of the DRB be the first QoS flow ID mapped to the DRB through the described mechanism of 'reflective QoS' on the AS level. Alternatively, an explicit configuration could be implemented by having the default QoS flow ID of the DRB may be configured through RRC.

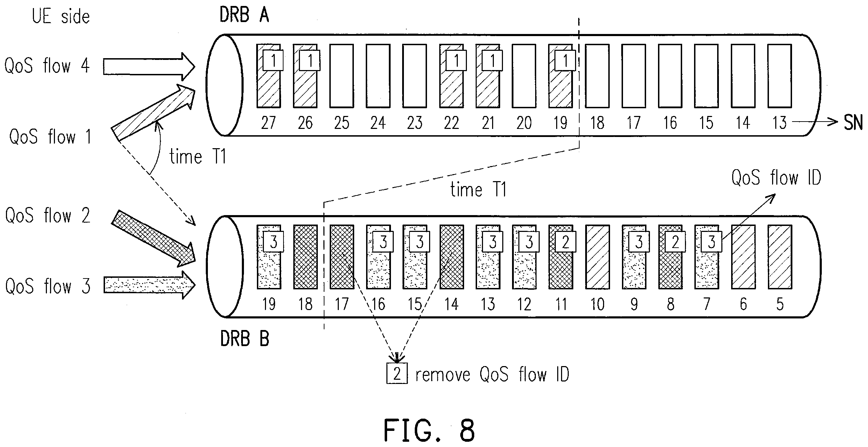

FIG. 8 - 9 illustrates explicitly reconfiguring a default QoS flow ID by an eNB through RRC signaling in accordance with one of the exemplary embodiments of the disclosure. As shown in FIG. 8, an eNB may send a RRC message including the new default QoS flow ID (QoS flow ID = 2) of a DRB (e.g. DRB B) and a (PDCP) sequence number (SN) (e.g. SN = 13) to an UE. The UE and the eNB may apply the new "default" QoS flow ID for all (PDCP) packets for which the PDCP SN is larger than the SN configured in RRC. For example, if the configured SN in RRC is 13, a reconstruction of packets such as by adding and / or removing the QoS flow ID with SN > 13 could be needed.

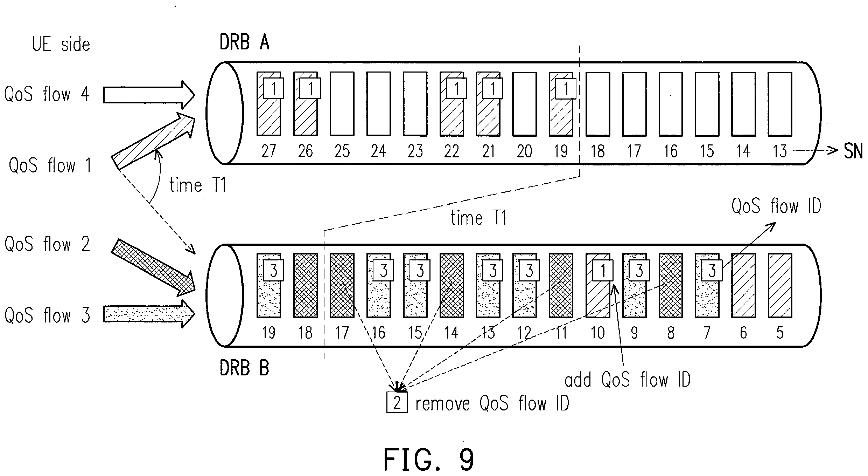

Referring to FIG. 9, if the configured SN in RRC is 7, then a reconstruction of packets such as by adding and / or removing QoS flow ID) with SN > 7 could be needed. In the example of FIG. 9, QoS flow D could be removed from the data packets with SN = 8, 11, 14, and 17. The QoS flow ID could be added to the data packets with SN = 10. It worth noting that adding the QoS flow ID could be mandatory but removing the QoS flow ID could be optional.

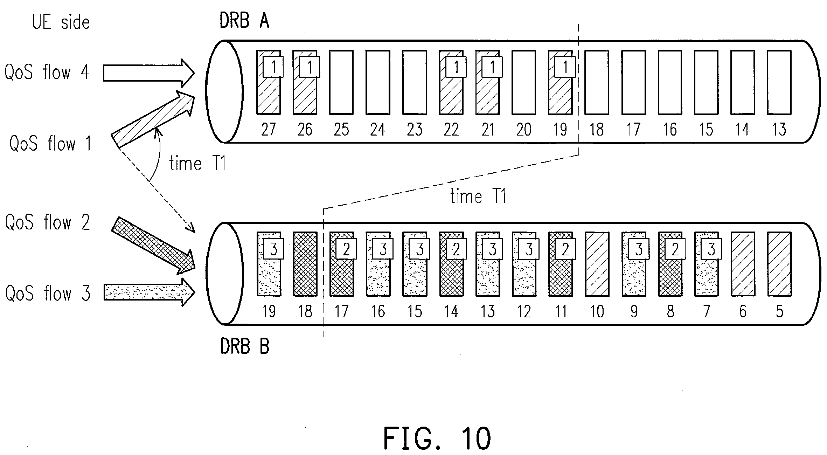

FIG. 10 illustrates explicitly reconfiguring a default QoS flow ID by an eNB and a UE through RRC signaling in accordance with one of the exemplary embodiments of the disclosure. For this exemplary embodiment, an eNB may send a RRC message including the new default QoS flow ID (e.g. QoS flow ID = 2) of a DRB (e.g. DRB B) to an UE. The UE may replies with a RRC message including a PDCP SN to the eNB. The UE and the eNB may apply the new "default" QoS flow ID for all PDCP packets for which the PDCP SN is larger than the SN configured in RRC. Since the SN is determined by UE, the UE may select a SN (e.g. SN = 17) which will not result in packet reconstruction. It is worth noting that this exemplary embodiment does not preclude the case of UE selecting a SN which will result in packet reconstruction.

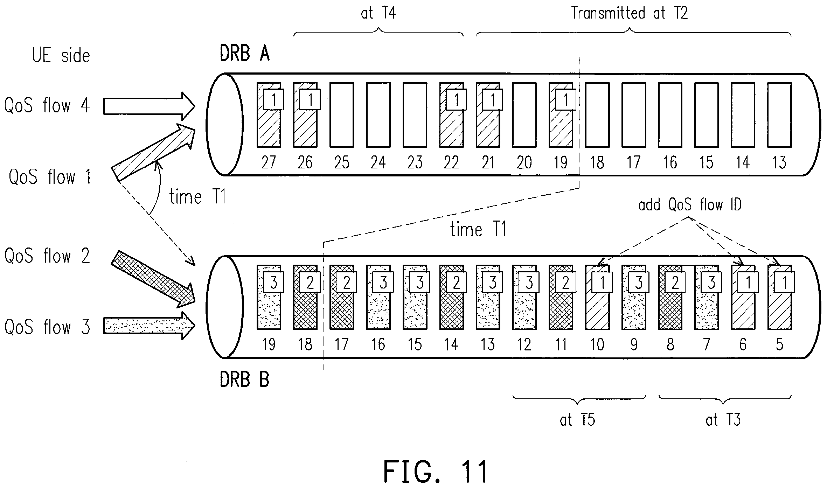

FIG. 11 illustrates implicitly reconfigured QoS flow ID with packet reconstruction in accordance with one of the exemplary embodiments of the disclosure. When the original default QoS flow ID (e.g. QoS flow ID = 1) of a DRB (e.g. DRB B) is remapped to another DRB (e.g. DRB A) through the previously described mechanism of 'reflective QoS' on an AS level, the new default QoS flow ID could be determined by a preconfigured rule which is known by eNB and UE.

For example, the second QoS flow ID (e.g. QoS flow ID = 2) could be mapped to the DRB through the previously described mechanism of 'reflective QoS' on the AS level. For example, the maximum QoS flow ID (e.g. QoS flow ID = 3) or minimum QoS flow ID (e.g. QoS flow ID = 2) of remaining QoSflow IDs could be mapped to the DRB. It is worth noting that this exemplary embodiment does not preclude the case of applying the mechanisms of previously described exemplary embodiments when the original default QoS flow ID of a DRB is remapped to another DRB through the previously described 'reflective QoS' on the AS level.

In an alternative embodiment, not being part of the invention, an eNB may apply the new default QoS flow ID while eNB detects that the remapping in UL has occurred. For example, the eNB at T2 would receive a packet (e.g. SN = 19) with the original default QoS flow ID (e.g. QoS flow ID = 1) from the newly mapped DRB (e.g. DRB A). For example, the eNB after T1 may receive an acknowledgment (ACK) of a DL packet resulting in UE remapping the original default QoS flow ID (e.g. QoS flow ID = 1) to another DRB (e.g. DRB A). The UE may perform packet reconstruction while remapping in UL occurs. The UE may add QoS flow ID to the packets with SN = 5, 6, 10. The UE may after T2 apply the new default QoS flow ID after the eNB applies the same. For example, the UE after T2 may receive an ACK of a packet (e.g. SN = 19) which had been transmitted through the newly mapped DRB (e.g. DRB A) with the original default QoS flow ID (e.g. DRB = 1). After T1, packets with SN = 13 ∼ 21 in DRB A are transmitted at T2, packets with SN = 5∼ 8 in DRB B are transmitted at T3, packets with SN = 22 ∼ 26 in DRB A are transmitted at T4, and packets with SN = 9 ∼ 12 in DRB B are transmitted at T5 assuming that T1 <T2<T3 <T4<T5.

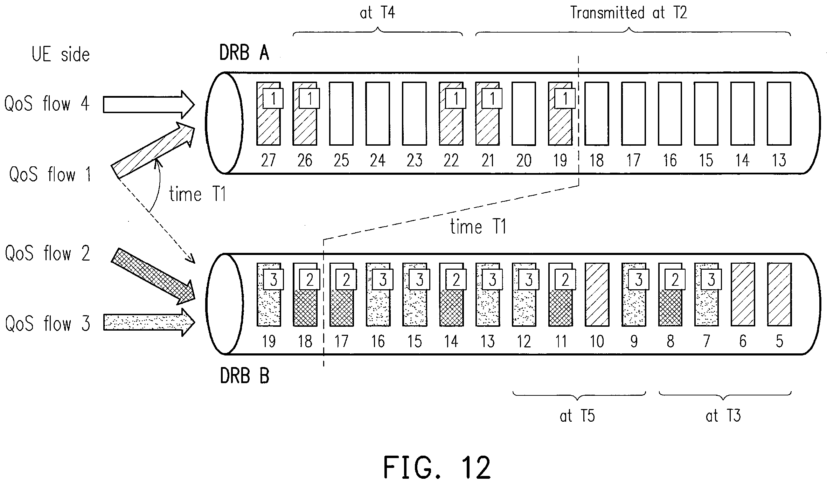

FIG. 12 illustrates implicitly reconfigured QoS flow ID without packet reconstruction in accordance with one of the exemplary embodiments of the disclosure. For this exemplary embodiment, not being part of the invention, when the original default QoS flow ID (e.g. QoS flow ID = 1) of a DRB (e.g. DRB B) is remapped to another DRB (e.g. DRB A) through the previously describe mechanism of 'reflective QoS' on an AS level, the new default QoS flow ID could be determined by a preconfigured rule which was previously described in FIG. 11 and its corresponding written description, although this exemplary embodiment does not preclude the mechanism provided in FIG. 8 - 10 and their corresponding written descriptions.

For this exemplary embodiment, a timer could be utilized by an eNB. The timer would start while the eNB detects that the remapping in UL has occurred. For example, the timer may start at T2, and the eNB has subsequently received a packet (e.g. SN = 19) with the original default QoS flow ID (e.g. QoS flow ID = 1) from the new mapped DRB (e.g. DRB A). Alternatively, the timer may start after T1, and the eNB has subsequently received an ACK of a DL packet resulting in UE remapping the original default QoS flow ID (e.g. QoS flow ID = 1) to another DRB (e.g. DRB A). The eNB may apply the new default QoS flow ID while the timer expires. The timer should be long enough to clear all remaining packets (e.g. SN = 5, 6, 10) which belong to the original default QoS flow in the DRB (e.g. DRB B).

A timer may also be introduced at the UE side. In this example, the timer may start after T5 while all remaining packets (e.g. SN = 5, 6, 10) which belong to the original default QoS flow in the DRB (e.g. DRB B) have been cleared. The UE may apply the new default QoS flow ID while the timer expires. The timer should be long enough to guarantee that the new default QoS flow ID has been applied by eNB. For example, the timer should be longer than the timer used by eNB.

In an alternative embodiment, not being part of the invention, the timer may start while remapping occurs such as the timer starting at T1. The timer may restart while a packet (e.g. SN = 5, 6, or 10) which belongs to the original default QoS flow in the DRB (e.g. DRB B) is transmitted. The UE may apply the new default QoS flow ID while the timer expires. The timer should be long enough to guarantee that the new default QoS flow ID has been applied by eNB. For example, the timer should be longer than the timer used by eNB.

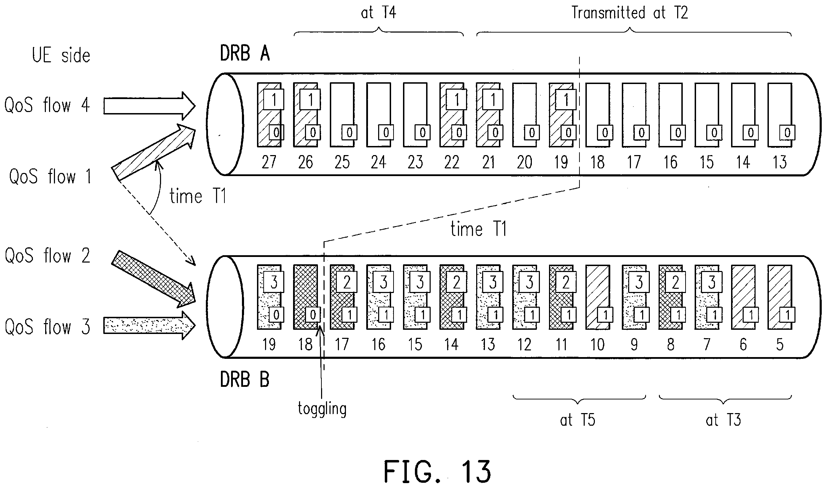

FIG. 13 illustrates implicitly reconfiguring a new default QoS flow ID and explicitly indicate which packets should apply the new default QoS flow ID by using an in-band indicator in accordance with one of the exemplary embodiments of the disclosure. For this exemplary embodiment, not being part of the invention, when the original default QoS flow ID (e.g. QoS flow ID = 1) of a DRB (e.g. DRB B) is remapped to another DRB (e.g. DRB A) through the previously described mechanism of 'reflective QoS' on an AS level, the new default QoS flow ID could be determined by a preconfigured rule which is known by eNB and UE as previously described in the exemplary embodiment of FIG. 11 of its corresponding written description. It is worth noting that this exemplary embodiment does not preclude using the techniques as described in FIG. 8 ∼ 10 and their corresponding written descriptions.

A per packet indicator could be used to indicate whether to apply the new default QoS flow ID for the packet. The indicator could be a one-bit indicator and may toggle as the default QoS flow ID changes. This indicator may be carried in PDCP header or the header of a new protocol layer above PDCP. Since when to toggle the indicator could be decided by UE, the UE may decide when to apply the new default QoS flow ID such that no packet reconstruction would be needed. For example, as the UE remaps QoS flow 1 from DRB B to DRB A at T1, the UE would toggle the indicator after T1. It is worth noting that this exemplary embodiment does not preclude the case of UE toggling the indicator which will result in packet reconstruction.

Next, the disclosure will provide several exemplary embodiments , not being part of the invention, related to DL cases. One objective of these exemplary embodiments is to reduce user plane protocol overhead in DL if a Core Network indication is not available. One concept used in these exemplary embodiments is that the default QoS flow ID used in UL could also be used in DL. Configuring the default QoS flow ID for DL could be accomplished by, for example having the default QoS flow ID for DL to be always equal to the default QoS flow ID for UL. The QoS flow ID could be reconfigured. Reconfiguring the QoS flow ID will be provided with further details.

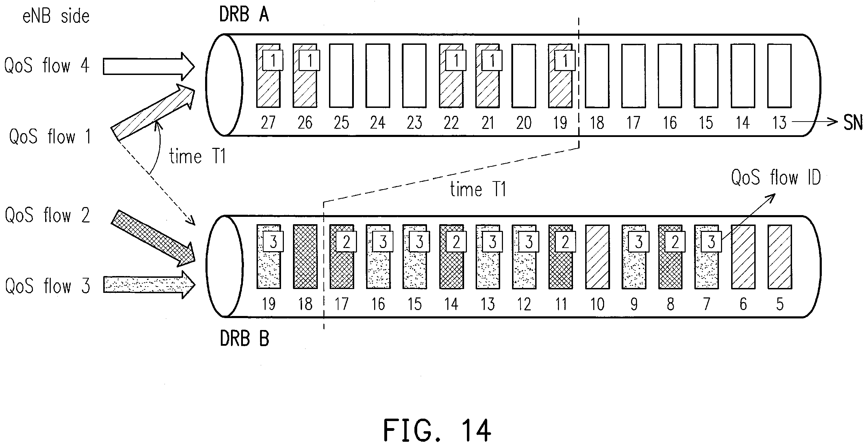

FIG. 14 - 15 illustrates explicitly reconfiguring QoS flow ID for downlink by eNB through RRC signaling in accordance with one of the exemplary embodiments of the disclosure. Referring to FIG. 14, an eNB may send a RRC message including the new default QoS flow ID (e.g. QoS flow ID = 2) of a DRB(e.g. DRB B)and a (PDCP) sequence number (e.g. PDCP = 17) to a UE. The UE and the eNB may apply the new default QoS flow ID for all (PDCP) packets whose (PDCP) SN is larger than the SN configured in RRC. Since the SN is determined by eNB, the eNB may select a SN (e.g. SN = 17) which will not result in packet reconstruction. It is worth noting that this exemplary embodiment does not preclude the case of having an eNB selecting a SN which will result in packet reconstruction.

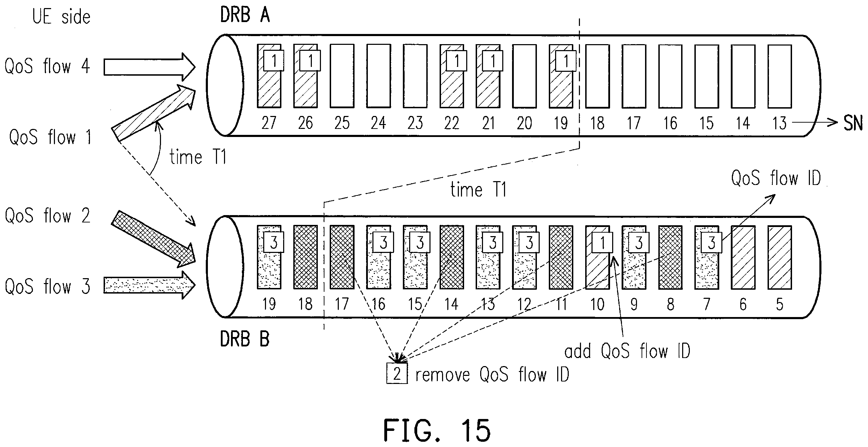

If the configured SN in RRC is 7, reconstruction of packets such as by adding and / or removing QoS flow ID with SN > 7 may be needed. For example, in the exemplary embodiment of FIG. 15, the QoS flow ID from packets with SN = 8, 11, 14, 17 could be removed. The QoS flow ID could be added to the packet with SN = 10. While adding QoS flow ID is mandatory, removing QoS flow ID could be optional.

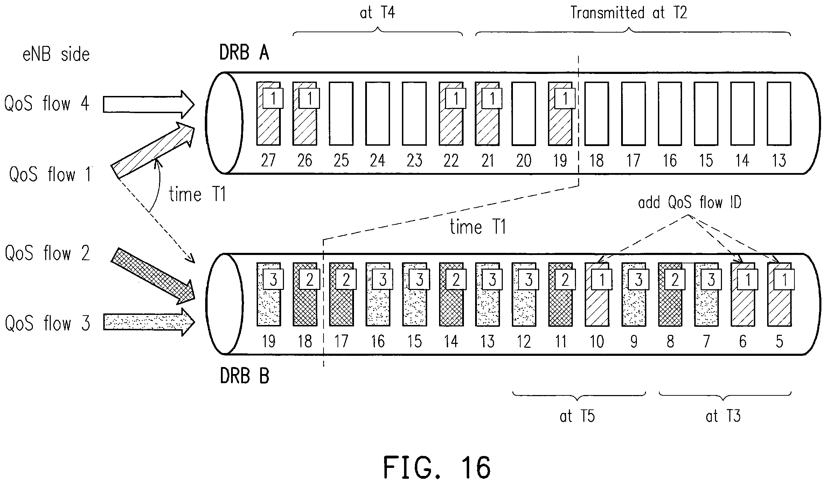

FIG. 16 illustrates implicitly reconfiguring QoS flow ID for downlink with packet reconstruction in accordance with one of the exemplary embodiments of the disclosure. For this exemplary embodiment, not being part of the invention, when the original default QoS flow ID (e.g. QoS flow ID = 1) of a DRB (e.g. DRB B)is remapped to another DRB (e.g. DRB A) in DL by an eNB, the new default QoS flow ID could be determined by a preconfigured rule which is known by the eNB and an UE. For example, the second QoS flow ID (e.g. QoS flow ID = 2) could be mapped to the DRB through the previously described mechanism of 'reflective QoS on an AS level. The maximum QoS flow ID (e.g. QoS flow ID = 3) or the minimum QoSflow ID (QoS flow ID = 2) of remaining QoS flow IDs could be mapped to the DRB. It is worth noting that this exemplary embodiment does not preclude the case of applying the technique of the exemplary embodiment of FIG. 14 and FIG. 15 and their corresponding written descriptions when the original default QoS flow ID of a DRB is remapped to another DRB in DL by the eNB. The UE may apply the new default QoS flow ID while the UE has detected that the remapping in DL has occurred. For example, the UE may apply the new default QoS flow ID at T2 when UE has received a packet (e.g. SN = 19) with the original default QoS flow ID (e.g. QoS flow ID = 1) from the newly mapped DRB (e.g. DRB A).

Referring to FIG. 16, the eNB may perform packet reconstruction while remapping in DL occurs. The UE may add QoS flow ID to the packets with SN = 5, 6, and 10. The eNB may apply the new default QoS flow ID after UE applies the same. For example, the eNB may apply the new default QoS flow ID after T2 when the eNB receives an ACK of a packet (e.g. SN = 19) which had been transmitted through the new mapped DRB (e.g. DRB A)with the original default QoS flow ID (e.g. QoS flow ID = 1).

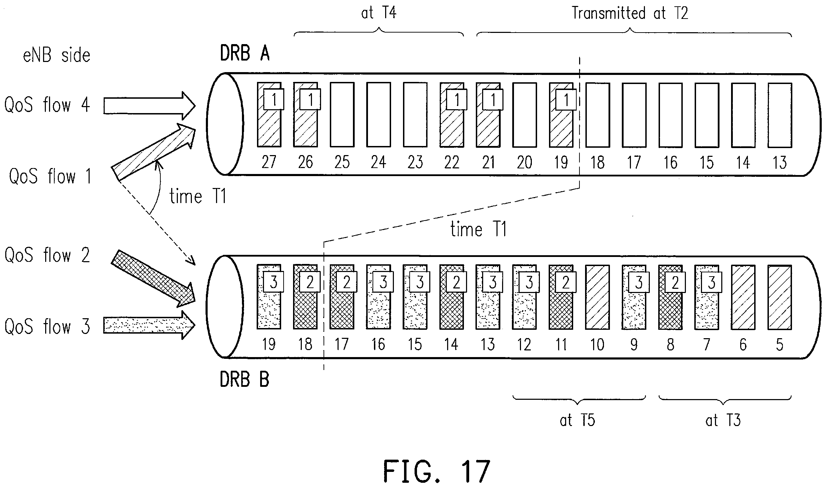

FIG. 17 illustrates implicitly reconfiguring QoS flow ID for downlink without packet reconstruction in accordance with one of the exemplary embodiments of the disclosure. For this exemplary embodiment, not being part of the invention, when the original default QoS flow ID (e.g. QoS flow ID = 1) of a DRB (e.g. DRB B) is remapped to another DRB (e.g. DRB A) in DL by an eNB, the new default QoS flow ID could be determined by a preconfigured rule which is known by the eNB and a UE, as described in the exemplary embodiment of FIG. 16 and its corresponding written description. It is worth noting that this exemplary embodiment does not preclude the case of applying the exemplary embodiments previously described in FIG. 14 and FIG. 15 and their corresponding written descriptions when the original default QoS flow ID of a DRB is remapped to another DRB in DL by the eNB.

The UE may use a timer which starts when the UE has detected that the remapping in DL has occurred occurs. For example, the timer may start at T2 when the UE receives a packet (e.g. SN = 19) with the original default QoS flow ID (e.g. QoS flow ID = 1) from the newly mapped DRB (e.g. DRB A). The UE may apply the new default QoS flow ID while the timer expires. The timer should be long enough such that all remaining packets (e.g. SN = 5, 6, 10) which belong to the original default QoS flow in the DRB (e.g. DRB B) are cleared.

A timer may also be introduced at the eNB side. The timer may start while all remaining packets (e.g. SN = 5, 6, 10) which belong to the original default QoS flow in the DRB (e.g. DRB B) have been cleared. For example, such timer may start after T5. The eNB may apply the new default QoS flow ID while the timer expires. The timer should be long enough to guarantee that the new default QoS flow ID has been applied by UE. For example, such timer should be greater than the timer used by the UE.

Alternatively, the timer used at the eNB side could be implemented in another way. For example, the timer may start while remapping occurs. For example, such timer may start at T1. The timer may restart while a packet (e.g. SN = 5, 6, or 10) which belongs to the original default QoS flow in the DRB (e.g. DRB B) has been transmitted. The eNB may apply the new default QoS flow ID while the timer expires. The timer should be long enough to guarantee that the new default QoS flow ID has been applied by UE. For example, such timer should be longer than the timer used by the UE.

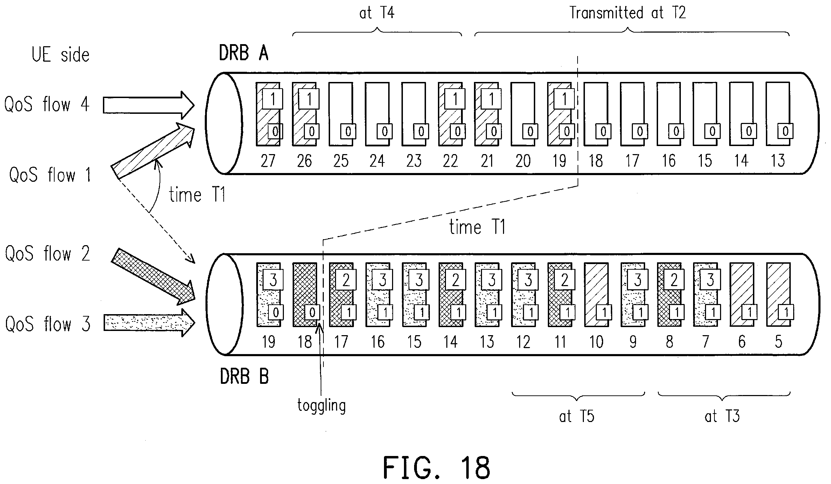

FIG. 18 illustrates implicitly reconfiguring a new default QoS flow ID for downlink and applying the new default ID by using an in-band indicator in accordance with one of the exemplary embodiments of the disclosure. For this exemplary embodiment, not being part of the invention, when the original default QoS flow ID (e.g. QoS flow ID = 1) of a DRB (e.g. DRB B) is remapped to another DRB (e.g. DRB A) in DL by an eNB, the new default QoS flow ID could be determined by a preconfigured rule which is known by the eNB and a UE as previously described in FIG. 16 and its exemplary embodiments. It is worth noting that this exemplary embodiment , not being part of the invention, does not preclude the case of applying the techniques described in FIG. 14 and FIG. 15 and their corresponding written descriptions when the original default QoS flow ID of a DRB has been remapped to another DRB in DL by the eNB. A per packet indicator may be used to indicate whether to apply the new default QoS flow ID for the packet. The indicator could be a one-bit indicator and toggle while the default QoS flow ID changes. The indicator could be carried in PDCP header or the header of a new protocol layer above PDCP. Since when to toggle the indicator is decided by an eNB, the eNB could decide when to apply the new default QoS flow ID such that no packet reconstruction is needed. It is worth noting that this exemplary embodiment does not preclude the case of an eNB toggling the indicator which will result in packet reconstruction. For the exemplary embodiment of FIG. 18, the eNB would remap QoS flow 1 from DRB B to DRB A at T1 so that the eNB would toggle the indicator after T1.

In view of the aforementioned descriptions, the present disclosure is suitable for being used in a wireless communication system and is able to reduce UE processing overhead and to reduce user plane protocol overhead in DL.

No element, act, or instruction used in the detailed description of disclosed embodiments of the present application should be construed as absolutely critical or essential to the present disclosure unless explicitly described as such. Also, as used herein, each of the indefinite articles "a" and "an" could include more than one item. If only one item is intended, the terms "a single" or similar languages would be used. Furthermore, the terms "any of' followed by a listing of a plurality of items and/or a plurality of categories of items, as used herein, are intended to include "any of', "any combination of", "any multiple of', and/or "any combination of multiples of the items and/or the categories of items, individually or in conjunction with other items and/or other categories of items. Further, as used herein, the term "set" is intended to include any number of items, including zero. Further, as used herein, the term "number" is intended to include any number, including zero.

## Claims

1. A method used by a user equipment, UE, to determine a used data radio bearer, DRB, for uplink, UL, data packet transmission, and the method comprising:
receiving through a first data radio bearer, DRB (DRB A), a first plurality of downlink, DL, data packets (SN 13 - 18) from a base station (S201);
determining, from a first plurality of protocol headers which correspond to the first plurality of DL data packets (SN 13 - 18), a first indicator which indicates that the first plurality of DL data packets belong to a first Quality of Service, QoS, flow (QoS flow 1) which has not been mapped to the first DRB (DRB A) (S202); and
mapping the first QoS flow (QoS flow 1) to the first DRB (DRB A) in response to the first plurality of DL data packets (SN 13 - 18) belonging to the first QoS flow (QoS flow 1) which has not been mapped to the first DRB (DRB A) (S203).

2. The method of claim 1 further comprising:
receiving, through the first DRB (DRB A), a second plurality of DL data packets (SN 19 - 27);
determining, from a second plurality of protocol headers which correspond to the second plurality of DL data packets (SN 19 - 27), a second indicator which indicates that the second plurality of DL data packets (SN 19 - 27) belong to a second QoS flow (QoS flow 2) which has been mapped to the first DRB (DRB A); and
not changing the mapping between the second QoS flow (QoS flow 2) and the first DRB (DRB A) in response to the second plurality of DL data packets (SN 19 - 27) belonging to the second QoS flow (QoS flow 2) which has been mapped to the first DRB (DRB A);.

3. The method of claim 1 or 2, wherein mapping the first QoS flow (QoS flow 1) to the first DRB (DRB A) in response to the first plurality of DL data packets (SN 13 - 18) belonging to the first QoS flow (QoS flow 1) which has not been mapped to the first DRB (DRB A) comprising:
obtaining, from the first plurality of protocol headers which correspond to the first plurality of DL data packets (SN 13 - 18), a first QoS flow identifier, ID, which identifies the first QoS flow (QoS flow 1);
adding, to a lookup table, a mapping relationship among the first QoS flow (QoS flow 1) and the first DRB (DRB A); and
removing, from the lookup table, a mapping relationship among the first QoS flow (QoS flow 1) and a second DRB (DRB B) if the mapping relationship among the first QoS flow (QoS flow 1) and the second DRB (DRB B) exists.

4. The method of claim 2 further comprising:
skip obtaining, from the second plurality of protocol headers which correspond to the second plurality of DL data packets (SN 19 - 27), a second QoS flow ID which identifies the second QoS flow (QoS flow 2), wherein the second indicator further indicates that the second QoS flow ID does not exist in the second plurality of protocol headers.

5. The method of claim 3 further comprising:
transmitting, through the first DRB (DRB A), a first plurality of UL data packets (SN 13 - 18) by determining from the lookup table, a QoS flow ID of the first plurality of UL data packets (SN 13 - 18) and a DRB which corresponds to the QoS flow ID.

6. A method used by a user equipment, UE, to determine a used Quality of Service, QoS. flow for uplink, UL, data packet transmission, and the method comprising:
receiving, through a first QoS flow (QoS flow 1), a first plurality of downlink, DL, data packets from a base station (S201);
determining, from a first plurality of protocol headers which correspond to the first plurality of DL data packets (SN 13 - 18), a first indicator which indicates that the first plurality of DL data packets (SN 13 - 18) belong to a first internet protocol, IP, flow which has not been mapped to the first QoS flow (QoS flow 1) (S202); and
mapping the first IP flow to the first QoS flow (QoS flow 1) in response to the first plurality of DL data packets (SN 13 - 18) belonging to the first IP flow which has not been mapped to the first QoS flow (QoS flow 1).

7. The method of claim 6 further comprising:
receiving, through the first QoS flow (QoS flow 1), a second plurality of DL data packets;
determining, from a second plurality of protocol headers which correspond to the second plurality of DL data packets (SN 19 - 27), a second indicator which indicates that the second plurality of DL data packets (SN 19 - 27) belong to a second IP flow which has been mapped to the first QoS flow (QoS flow 1); and
not changing the mapping between the second IP flow and the first QoS flow (QoS flow 1) in response to the second plurality of DL data packets (SN 19 - 27) belonging to the second IP flow which has been mapped to the first QoS flow (QoS flow 1).

8. The method of claim 6 or 7, wherein mapping the first IP flow to the first QoS flow (QoS flow 1) in response to the first plurality of DL data packets (SN 13 - 18) belonging to the first IP flow which has not been mapped to the first QoS flow (QoS flow 1) comprising:
obtaining, from the first plurality of protocol headers which correspond to the first plurality of DL data packets (SN 13 - 18), a first QoS flow identifier, ID, which identifies the first QoS flow(QoS flow 1);
adding, to a lookup table, a mapping relationship among the first IP flow and the first QoS flow (QoS flow 1); and
removing, from the lookup table, a mapping relationship among the first IP flow and a second QoS flow (QoS flow 2) if the mapping relationship among the first IP flow and the second QoS flow exists (QoS flow 2).

9. The method of claim 7 further comprising:
skip obtaining, from the second plurality of protocol headers which correspond to the second plurality of DL data packets (SN 19 - 27), a second QoS flow ID which identifies the second QoS flow (QoS flow 2), wherein the second indicator also indicates that the second QoS flow ID does not exist in the second plurality of protocol headers.

10. The method of claim 7 further comprising:
transmitting, to the CN through the first QoS flow (QoS flow 1), a first plurality of UL data packets (SN 13 - 18) by determining from the lookup table, a IP flow ID of the first plurality of UL data packets (SN 13 - 18) and a QoS flow ID which corresponds to the IP flow ID.

11. A user equipment comprising:
a transmitter (302);
a receiver (302); and
a processor (301) coupled to the transmitter (302) and the receiver (302) and configured to:
receive, via the receiver through a first data radio bearer, DRB (DRB A), a first plurality of downlink, DL, data packets (SN 13 - 18) from a base station (S201);
determine, from a first plurality of protocol headers which correspond to the first plurality of DL data packets (SN 13 - 18), a first indicator which indicates that the first plurality of DL data packets (SN 13 - 18) belong to a first Quality of Service, QoS, flow (Qos flow 1) which has not been mapped to the first DRB (DRB A) (S202); and
map the first QoS flow (Qos flow 1) to the first DRB (DRB A) in response to the first plurality of DL data packets (SN 13 - 18) belonging to the first QoS flow (Qos flow 1) which has not been mapped to the first DRB (S203) (DRB A).

12. A user equipment comprising:
a transmitter (302);
a receiver (S302); and
a processor (S301) coupled to the transmitter and the receiver and configured to:
receive, through a first QoS flow (QoS flow 1), a first plurality of downlink, DL, data packets (SN 13 - 18) from a base station (S201);
determine, from a first plurality of protocol headers which correspond to the first plurality of DL data packets (SN 13 - 18), a first indicator which indicates that the first plurality of DL data packets (SN 13 - 18) belong to a first internet protocol, IP, flow which has not been mapped to the first QoS flow (Qos flow 1) (S202); and
map the first IP flow to the first QoS flow (QoS flow 1) in response to the first plurality of DL data packets (SN 13 - 18) belonging to the first IP flow which has not been mapped to the first QoS flow (Qos flow 1).

## Patentansprüche

1. Verfahren, das von einem Benutzergerät, UE, verwendet wird, um einen verwendeten Datenfunkträger, DRB, zur Uplink-, UL, Datenpaketübertragung zu bestimmen, und wobei das Verfahren umfasst:
Empfangen einer ersten Vielzahl von Downlink-, DL-, Datenpaketen (SN 13 - 18) von einer Basisstation durch einen ersten Datenfunkträger, DRB (DRB A) (S201);
Bestimmen, aus einer ersten Vielzahl von Protokoll-Headern, die der ersten Vielzahl von DL-Datenpaketen (SN 13 - 18) entsprechen, eines ersten Indikators, der anzeigt, dass die erste Vielzahl von DL-Datenpaketen zu einem ersten Dienstgüte-, QoS, Fluss (QoS-Fluss 1) gehört, der nicht auf den ersten DRB (DRB A) abgebildet wurde (S202); und
Abbilden des ersten QoS-Flusses (QoS-Fluss 1) auf den ersten DRB (DRB A) als Reaktion auf die erste Vielzahl von DL-Datenpaketen (SN 13 - 18), die zu dem ersten QoS-Fluss (QoS-Fluss 1) gehören, der nicht auf den ersten DRB (DRB A) abgebildet wurde (S203).

2. Verfahren nach Anspruch 1, ferner umfassend:
Empfangen einer zweiten Vielzahl von DL-Datenpaketen (SN 19 - 27) durch den ersten DRB (DRB A);
Bestimmen, aus einer zweiten Vielzahl von Protokoll-Headern, die der zweiten Vielzahl von DL-Datenpaketen (SN 19 - 27) entsprechen, eines zweiten Indikators, der anzeigt, dass die zweite Vielzahl von DL-Datenpaketen (SN 19 - 27) zu einem zweiten QoS-Fluss (QoS-Fluss 2) gehört, der auf den ersten DRB (DRB A) abgebildet wurde; und
Nichtändern der Abbildung zwischen dem zweiten QoS-Fluss (QoS-Fluss 2) und dem ersten DRB (DRB A) als Reaktion auf die zweite Vielzahl von DL-Datenpaketen (SN 19 - 27), die zu dem zweiten QoS-Fluss (QoS-Fluss 2) gehören, der auf den ersten DRB (DRB A) abgebildet wurde.

3. Verfahren nach Anspruch 1 oder 2, wobei das Abbilden des ersten QoS-Flusses (QoS-Fluss 1) auf den ersten DRB (DRB A) als Reaktion auf die erste Vielzahl von DL-Datenpaketen (SN 13 - 18), die zu dem ersten QoS-Fluss (QoS-Fluss 1) gehören, der nicht auf den ersten DRB (DRB A) abgebildet wurde, umfasst:
Erhalten, aus der ersten Vielzahl von Protokoll-Headern, die der ersten Vielzahl von DL-Datenpaketen (SN 13 - 18) entsprechen, einer ersten QoS-Fluss-Kennung, ID, die den ersten QoS-Fluss (QoS-Fluss 1) identifiziert;
Hinzufügen einer Abbildungsbeziehung zwischen dem ersten QoS-Fluss (QoS-Fluss 1) und dem ersten DRB (DRB A) zu einer Nachschlagetabelle; und
Entfernen einer Abbildungsbeziehung zwischen dem ersten QoS-Fluss (QoS-Fluss 1) und einem zweiten DRB (DRB B) aus der Nachschlagetabelle, wenn die Abbildungsbeziehung zwischen dem ersten QoS-Fluss (QoS-Fluss 1) und dem zweiten DRB (DRB B) existiert.

4. Verfahren nach Anspruch 2, ferner umfassend:
Überspringen eines Erhaltens, aus der zweiten Vielzahl von Protokoll-Headern, die der zweiten Vielzahl von DL-Datenpaketen (SN 19 - 27) entsprechen, einer zweiten QoS-Fluss-ID, die den zweiten QoS-Fluss (QoS-Fluss 2) identifiziert, wobei der zweite Indikator ferner anzeigt, dass die zweite QoS-Fluss-ID in der zweiten Vielzahl von Protokoll-Headern nicht existiert.

5. Verfahren nach Anspruch 3, ferner umfassend:
Übertragen einer ersten Vielzahl von UL-Datenpaketen (SN 13 - 18) durch den ersten DRB (DRB A) durch Bestimmen, aus der Nachschlagtabelle, einer QoS-Fluss-ID der ersten Vielzahl von UL-Datenpaketen (SN 13 - 18) und eines DRB, der der QoS-Fluss-ID entspricht.

6. Verfahren, das von einem Benutzergerät, UE, verwendet wird, um einen verwendeten Dienstgüte-, QoS, Fluss zur Uplink-, UL, Datenpaketübertragung zu bestimmen, und wobei das Verfahren umfasst:
Empfangen einer ersten Vielzahl von Downlink-, DL-Datenpaketen von einer Basisstation durch einen ersten QoS-Fluss (QoS-Fluss 1) (S201);
Bestimmen, aus einer ersten Vielzahl von Protokoll-Headern, die der ersten Vielzahl von DL-Datenpaketen (SN 13 - 18) entsprechen, eines ersten Indikators, der anzeigt, dass die erste Vielzahl von DL-Datenpaketen (SN 13 - 18) zu einem ersten Internet-Protokoll-, IP, Fluss, gehört, der nicht auf den ersten QoS-Fluss (QoS-Fluss 1) abgebildet wurde (S202); und
Abbilden des ersten IP-Flusses auf den ersten QoS-Fluss (QoS-Fluss 1) als Reaktion auf die erste Vielzahl von DL-Datenpaketen (SN 13 - 18), die zu dem ersten IP-Fluss gehören, der nicht auf den ersten QoS-Fluss (QoS-Fluss 1) abgebildet wurde.

7. Verfahren nach Anspruch 6, ferner umfassend:
Empfangen einer zweiten Vielzahl von DL-Datenpaketen durch den ersten QoS-Fluss (QoS-Fluss 1);
Bestimmen, aus einer zweiten Vielzahl von Protokoll-Headern, die der zweiten Vielzahl von DL-Datenpaketen (SN 19 - 27) entsprechen, eines zweiten Indikators, der anzeigt, dass die zweite Vielzahl von DL-Datenpaketen (SN 19 - 27) zu einem zweiten IP-, Fluss gehören, der auf den ersten QoS-Fluss (QoS-Fluss 1) abgebildet wurde; und
Nichtändern der Abbildung zwischen dem zweiten IP-Fluss und dem ersten QoS-Fluss (QoS-Fluss 1) als Reaktion auf die zweite Vielzahl von DL-Datenpaketen (SN 19 - 27), die zu dem zweiten IP-Fluss gehören, der auf den ersten QoS-Fluss (QoS-Fluss 1) abgebildet wurde.

8. Verfahren nach Anspruch 6 oder 7, wobei das Abbilden des ersten IP-Flusses auf den ersten QoS-Fluss (QoS-Fluss 1) als Reaktion auf die erste Vielzahl von DL-Datenpaketen (SN 13 - 18), die zu dem ersten IP-Fluss gehören, der nicht auf den ersten QoS-Fluss (QoS-Fluss 1) abgebildet wurde, umfasst:
Erhalten, aus der ersten Vielzahl von Protokoll-Headern, die der ersten Vielzahl von DL-Datenpaketen (SN 13 - 18) entsprechen, einer ersten QoS-Fluss-Kennung, ID, die den ersten QoS-Fluss (QoS-Fluss 1) identifiziert;
Hinzufügen einer Abbildungsbeziehung zwischen dem ersten IP-Fluss und dem ersten QoS-Fluss (QoS-Fluss 1) zu einer Nachschlagetabelle; und
Entfernen einer Abbildungsbeziehung zwischen dem ersten IP-Fluss und einem zweiten QoS-Fluss (QoS-Fluss 2) aus der Nachschlagetabelle, wenn die Abbildungsbeziehung zwischen dem ersten IP-Fluss und dem zweiten QoS-Fluss (QoS-Fluss 2) existiert.

9. Verfahren nach Anspruch 7, ferner umfassend:
Überspringen eines Erhalten, aus der zweiten Vielzahl von Protokoll-Headern, die der zweiten Vielzahl von DL-Datenpaketen (SN 19 - 27) entsprechen, einer zweiten QoS-Fluss-ID, die den zweiten QoS-Fluss (QoS-Fluss 2) identifiziert, wobei der zweite Indikator auch anzeigt, dass die zweite QoS-Fluss-ID in der zweiten Vielzahl von Protokoll-Headern nicht existiert.

10. Verfahren nach Anspruch 7, ferner umfassend:
Übertragen, an das CN, durch den ersten QoS-Fluss (QoS-Fluss 1), einer ersten Vielzahl von UL-Datenpaketen (SN 13 - 18) durch Bestimmen, aus der Nachschlagetabelle, einer IP-Fluss-ID der ersten Vielzahl von UL-Datenpaketen (SN 13 - 18) und einer QoS-Fluss-ID, die der IP-Fluss-ID entspricht.

11. Benutzerausrüstung, umfassend:
einen Sender (302);
einen Empfänger (302); und
einen Prozessor (301), der mit dem Sender (302) und dem Empfänger (302) gekoppelt ist und ausgelegt ist zum:
Empfangen, über den Empfänger, durch einen ersten Datenfunkträger, DRB (DRB A), einer ersten Vielzahl von Downlink-, DL-, Datenpaketen (SN 13 - 18) von einer Basisstation (S201);
Bestimmen, aus einer ersten Vielzahl von Protokoll-Headern, die der ersten Vielzahl von DL-Datenpaketen (SN 13 - 18) entsprechen, eines ersten Indikators, der anzeigt, dass die erste Vielzahl von DL-Datenpaketen (SN 13 - 18) zu einem ersten Dienstgüte-, QoS, Fluss (QoS-Fluss 1) gehört, der nicht auf den ersten DRB (DRB A) abgebildet wurde (S202); und
Abbilden des ersten QoS-Flusses (QoS-Fluss 1) auf den ersten DRB (DRB A) als Reaktion auf die erste Vielzahl von DL-Datenpaketen (SN 13 - 18), die zu dem ersten QoS-Fluss (QoS-Fluss 1) gehören, der nicht auf den ersten DRB (DRB A) abgebildet wurde (S203).

12. Benutzerausrüstung, umfassend:
einen Sender (302);
einen Empfänger (S302); und
einen Prozessor (S301), der mit dem Sender und dem Empfänger gekoppelt ist und ausgelegt ist zum:
Empfangen einer ersten Vielzahl von Downlink-, DL-Datenpaketen (SN 13-18) von einer Basisstation (S201) durch einen ersten QoS-Fluss (QoS-Fluss 1);
Bestimmen, aus einer ersten Vielzahl von Protokoll-Headern, die der ersten Vielzahl von DL-Datenpaketen (SN 13 - 18) entsprechen, eines ersten Indikators, der anzeigt, dass die erste Vielzahl von DL-Datenpaketen (SN 13 - 18) zu einem ersten Internet-Protokoll-, IP, Fluss gehört, der nicht auf den ersten QoS-Fluss (QoS-Fluss 1) abgebildet wurde (S202); und
Abbilden des ersten IP-Flusses auf den ersten QoS-Fluss (QoS-Fluss 1) als Reaktion auf die erste Vielzahl von DL-Datenpaketen (SN 13 - 18), die zu dem ersten IP-Fluss gehören, der nicht dem ersten QoS-Fluss (QoS-Fluss 1) abgebildet wurde.

## Revendications

1. Procédé utilisé par un équipement d'utilisateur, UE, pour déterminer un support radio de données, DRB, utilisé pour une transmission de paquets de données de liaison montante, UL, et le procédé comprenant :
la réception, par l'intermédiaire d'un premier support radio de données, DRB (DRB A), d'une première pluralité de paquets de données de liaison descendante, DL, (SN 13 - 18) depuis une station de base (S201) ;
la détermination, depuis une première pluralité d'entêtes de protocole correspondant à la première pluralité de paquets de données DL (SN 13 -18), d'un premier indicateur indiquant que la première pluralité de paquets de données DL appartiennent à un premier flux de qualité de service, QoS, (flux QoS 1) qui n'a pas été mappé avec le premier DRB (DRB A) (S202) ; et
le mappage du premier flux QoS (flux QoS 1) avec le premier DRB (DRB A) en réponse à la première pluralité de paquets de données DL (SN 13 - 18) appartenant au premier flux QoS (flux QoS 1) qui n'a pas été mappé avec le premier DRB (DRB A) (S203).

2. Procédé selon la revendication 1, comprenant en outre :
la réception, par l'intermédiaire du premier DRB (DRB A), d'une deuxième pluralité de paquets de données DL (SN 19 - 27) ;
la détermination, depuis une deuxième pluralité d'entêtes de protocole correspondant à la deuxième pluralité de paquets de données DL (SN 19 - 27), d'un deuxième indicateur qui indique que la deuxième pluralité de paquets de données DL (SN 19 - 27) appartiennent à un deuxième flux QoS (flux QoS 2) qui a été mappé avec le premier DRB (DRB A) ; et
le non-changement du mappage entre le deuxième flux QoS (flux QoS 2) et le premier DRB (DRB A) en réponse à la deuxième pluralité de paquets de données DL (SN 19 - 27) appartenant au deuxième flux QoS (flux QoS 2) qui a été mappé avec le premier DRB (DRB A).

3. Procédé selon la revendication 1 ou 2, dans lequel le mappage du premier flux QoS (flux QoS 1) avec le premier DRB (DRB A) en réponse à la première pluralité de paquets de données DL (SN 13 - 18) appartenant au premier flux QoS (flux QoS 1) qui n'a pas été mappé avec le premier DRB (DRB A) comprenant :
l'obtention, depuis la première pluralité d'en-têtes de protocole correspondant à la première pluralité de paquets de données DL (SN 13 - 18), d'un premier identifiant, ID, de flux QoS qui identifie le premier flux QoS (flux QoS 1) ;
l'ajout, à une table de consultation, d'une relation de mappage entre le premier flux QoS (flux QoS 1) et le premier DRB (DRB A) ; et
la suppression, de la table de consultation, d'une relation de mappage entre le premier flux QoS (flux QoS 1) et un deuxième DRB (DRB B) si la relation de mappage entre le premier flux QoS (flux QoS 1) et le deuxième DRB (DRB B) existe.

4. Procédé selon la revendication 2, comprenant en outre :
le saut de l'obtention, depuis la deuxième pluralité d'en-têtes de protocole correspondant à la deuxième pluralité de paquets de données DL (SN 19 - 27), d'un deuxième ID de flux QoS qui identifie le deuxième flux QoS (flux QoS 2), dans lequel le deuxième indicateur indique en outre que le deuxième ID de flux QoS n'existe pas dans la deuxième pluralité d'en-têtes de protocole.

5. Procédé selon la revendication 3, comprenant en outre :
la transmission, par l'intermédiaire du premier DRB (DRB A), d'une première pluralité de paquets de données UL (SN 13 - 18) par la détermination, depuis la table de consultation, d'un ID de flux QoS de la première pluralité de paquets de données UL (SN 13 - 18) et d'un DRB qui correspond à l'ID de flux QoS.

6. Procédé utilisé par un équipement d'utilisateur, UE, pour déterminer un flux de qualité de service, QoS, utilisé pour une transmission de paquets de données de liaison montante, UL, et le procédé comprenant :
la réception, par l'intermédiaire d'un premier flux QoS (flux QoS 1), d'une première pluralité de paquets de données de liaison descendante, DL, depuis une station de base (S201) ;
la détermination, depuis une première pluralité d'entêtes de protocole correspondant à la première pluralité de paquets de données DL (SN 13 -18), d'un premier indicateur indiquant que la première pluralité de paquets de données DL (SN 13 - 18) appartiennent à un premier flux de protocole Internet, IP, qui n'a pas été mappé avec le premier flux QoS (flux QoS 1) (S202) ; et
le mappage du premier flux IP avec le premier flux QoS (flux QoS 1) en réponse à la première pluralité de paquets de données DL (SN 13 - 18) appartenant au premier flux IP qui n'a pas été mappé avec le premier flux QoS (flux QoS 1).

7. Procédé selon la revendication 6, comprenant en outre :
la réception, par l'intermédiaire du premier flux QoS (flux QoS 1), d'une deuxième pluralité de paquets de données DL ;
la détermination, depuis une deuxième pluralité d'entêtes de protocole correspondant à la deuxième pluralité de paquets de données DL (SN 19 - 27), d'un deuxième indicateur qui indique que la deuxième pluralité de paquets de données DL (SN 19 - 27) appartiennent à un deuxième flux IP qui a été mappé avec le premier flux QoS (flux QoS 1) ; et
le non-changement du mappage entre le deuxième flux IP et le premier flux QoS (flux QoS 1) en réponse à la deuxième pluralité de paquets de données DL (SN 19 - 27) appartenant au deuxième flux IP qui a été mappé avec le premier flux QoS (flux QoS 1).

8. Procédé selon la revendication 6 ou 7, dans lequel le mappage du premier flux IP avec le premier flux QoS (flux QoS 1) en réponse à la première pluralité de paquets de données DL (SN 13 - 18) appartenant au premier flux IP qui n'a pas été mappé avec le premier flux QoS (flux QoS 1) comprenant :
l'obtention, depuis la première pluralité d'en-têtes de protocole correspondant à la première pluralité de paquets de données DL (SN 13 - 18), d'un premier identifiant, ID, de flux QoS qui identifie le premier flux QoS (flux QoS 1) ;
l'ajout, à une table de consultation, d'une relation de mappage entre le premier flux IP et le premier flux QoS (flux QoS 1) ; et
la suppression, de la table de consultation, d'une relation de mappage entre le premier flux IP et un deuxième flux QoS (flux QoS 2) si la relation de mappage entre le premier flux IP et le deuxième flux QoS (flux QoS 2) existe.

9. Procédé selon la revendication 7, comprenant en outre :
le saut de l'obtention, depuis la deuxième pluralité d'en-têtes de protocole correspondant à la deuxième pluralité de paquets de données DL (SN 19 - 27), d'un deuxième ID de flux QoS qui identifie le deuxième flux QoS (flux QoS 2), dans lequel le deuxième indicateur indique également que le deuxième ID de flux QoS n'existe pas dans la deuxième pluralité d'en-têtes de protocole.

10. Procédé selon la revendication 7, comprenant en outre :
la transmission, au CN par l'intermédiaire du premier flux QoS (flux QoS 1), d'une première pluralité de paquets de données UL (SN 13 - 18) par la détermination, depuis la table de consultation, d'un ID de flux IP de la première pluralité de paquets de données UL (SN 13 - 18) et d'un ID de flux QoS qui correspond à l'ID de flux QoS.

11. Equipement d'utilisateur comprenant :
un émetteur (302) ;
un récepteur (302) ; et
un processeur (301) couplé à l'émetteur (302) et au récepteur (302) et configuré pour :
recevoir, via le récepteur par l'intermédiaire d'un premier support radio de données, DRB (DRB A), une première pluralité de paquets de données de liaison descendante, DL, (SN 13 - 18) depuis une station de base (S201) ;
déterminer, depuis une première pluralité d'entêtes de protocole correspondant à la première pluralité de paquets de données DL (SN 13 -18), un premier indicateur indiquant que la première pluralité de paquets de données DL (SN 13 - 18) appartiennent à un premier flux de qualité de service, QoS, (flux QoS 1) qui n'a pas été mappé avec le premier DRB (DRB A) (S202) ; et
mapper le premier flux QoS (flux QoS 1) avec le premier DRB (DRB A) en réponse à la première pluralité de paquets de données DL (SN 13 - 18) appartenant au premier flux QoS (flux QoS 1) qui n'a pas été mappé avec le premier DRB (DRB A) (S203).

12. Equipement d'utilisateur comprenant :
un émetteur (302) ;
un récepteur (S302) ; et
un processeur (S301) couplé à l'émetteur et au récepteur et configuré pour :
recevoir, par l'intermédiaire d'un premier flux QoS (flux QoS 1), une première pluralité de paquets de données de liaison descendante, DL, (SN 13 - 18) depuis une station de base (S201) ;
déterminer, depuis une première pluralité d'entêtes de protocole correspondant à la première pluralité de paquets de données DL (SN 13 -18), un premier indicateur indiquant que la première pluralité de paquets de données DL (SN 13 - 18) appartiennent à un premier flux de protocole Internet, IP, qui n'a pas été mappé avec le premier flux QoS (flux QoS 1) (S202) ; et
mapper le premier flux IP avec le premier flux QoS (flux QoS 1) en réponse à la première pluralité de paquets de données DL (SN 13 - 18) appartenant au premier flux IP qui n'a pas été mappé avec le premier flux QoS (flux QoS 1).
